# EUROPEAN PATENT APPLICATION

(11) **EP 4 552 802 A1**
(43) Date of publication of application: **14.05.2025**
(21) Application number: 24208065.3
(22) Date of filing: 22.10.2024
(51) Int. Cl.: B25C 1/06

(54) **NOISE REDUCTION DEVICE AND ELECTRIC NAIL GUN HAVING THE SAME**

(30) Priority: 08.11.2023 TW 112143028
(71) Applicant: Basso Industry Corp., 40768 Taichung (TW)
(72) Inventor: CHIEN, Chia-Yu, 40768 Taichung (TW)
(74) Representative: Marks & Clerk LLP

(57) **Abstract**

An electric nail gun (2) includes a supporting frame (21), a striking unit (23), and a noise reduction device mounted to the supporting frame (21), spaced apart from the striking unit (23), and including a shaft member (3), a stator unit (4), a rotor unit (5), and a noise reducing unit (6). The rotor unit (5) includes a magnetic unit (52) driven by the stator unit (4) to rotate, and a flywheel set (51) co-rotatably connected to the magnetic unit (52), and for contacting the striking unit (23) and for driving the striking unit (23) to move relative to the flywheel set (51) during rotation of the flywheel set (51). The noise reducing unit (6) surrounds the shaft member (3), is mounted to the flywheel set (51), and is for absorbing energy of sound waves generated when the flywheel set (51) contacts the striking unit (23).

## Description

The disclosure relates to a noise reduction device, and more particularly to an electric nail gun having the noise reduction device.

Referring to FIG. 1, a conventional driving device 1 for an electric nail gun disclosed in Taiwanese Invention Patent No. I746665 is for driving a striking unit (not shown) to perform a nail-striking operation. The conventional driving device 1 includes a housing 10, a rotary shaft 11 extending through the housing 10, a rotor unit 12 rotatably sleeved on the rotary shaft 11, and a stator unit 13 for driving the rotor unit 12 to rotate. The rotor unit 12 includes a flywheel 121 exposed outwardly of the housing 10 to be in frictional contact with the striking unit, a magnetic member mounting ring 122 extending into the stator unit 13, and a magnetic set 123 disposed around an outer surface of the magnetic member mounting ring 122. The stator unit 13 includes a coil set 131 surrounding the magnetic set 123 and for generating a magnetic field that drives rotation of the rotor unit 12.

Since the flywheel 121 and the striking unit are both made of metal, a sharp metallic sound is generated when the striking unit contacts the flywheel 121 that rotates at a high speed when performing the nail-striking operation, which adversely affects user comfort during use.

Therefore, an object of the disclosure is to provide an electric nail gun that can alleviate at least one of the drawbacks of the prior art.

According to an aspect of the present disclosure, there is provided an electric nail gun according to claim 1..

Other features and advantages of the disclosure will become apparent in the following detailed description of the embodiment(s) with reference to the accompanying drawings. It is noted that various features may not be drawn to scale.

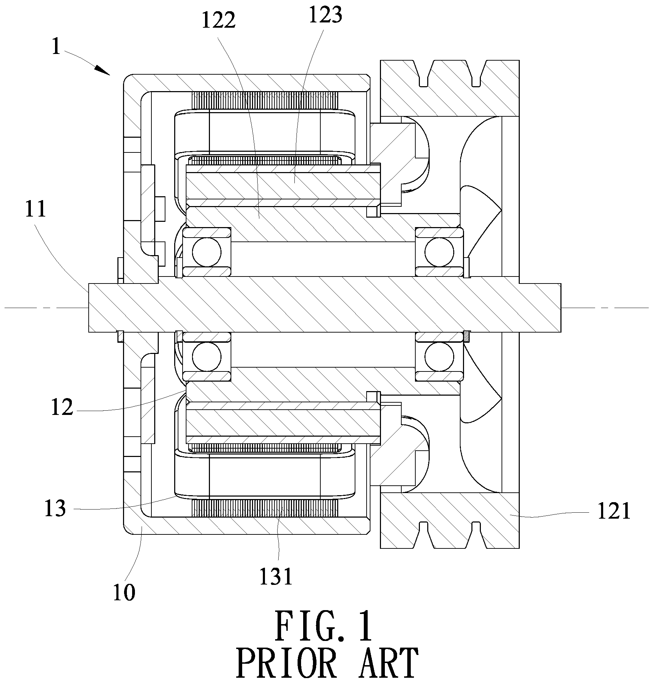

FIG. 1 is a sectional view of a conventional driving device for an electric nail gun disclosed in Taiwanese Invention Patent No. 1746665.
FIG. 2 is a fragmentary sectional view of a noise reduction device of an embodiment according to the present disclosure to be used in an electric nail gun, illustrating a swing arm unit of the embodiment at a normal position.
FIG. 3 is a partly exploded perspective view of the embodiment.
FIG. 4 is a perspective view of the embodiment, illustrating a noise reducing unit of the embodiment.
FIG. 5 is a fragmentary sectional view of the embodiment.
FIG. 6 is a sectional view taken along line VI-VI in FIG. 5.
FIG. 7 is a fragmentary sectional view similar to FIG. 2, but illustrates the swing arm unit at a striking position.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

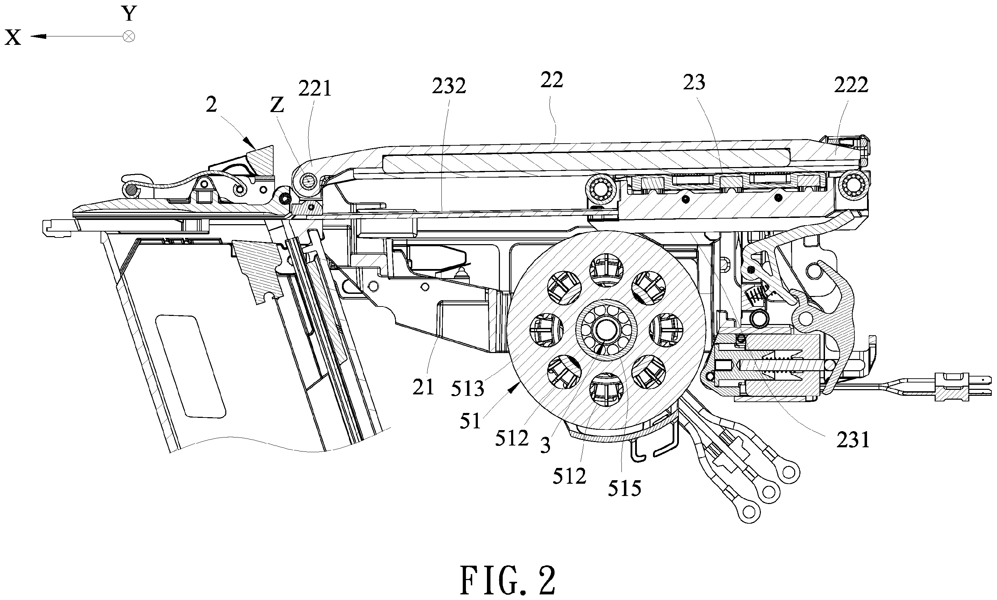

Referring to FIG. 2, a noise reduction device of an embodiment according to the present disclosure is to be used in an electric nail gun 2. The electric nail gun 2 includes a supporting frame 21, a swing arm unit 22, and a striking unit 23. In this embodiment, the electric nail gun 2 is a flywheel nail gun.

The swing arm unit 22 substantially extends in a nail-striking direction (X), is pivotably connected to the supporting frame 21, and is operable to swing about a swing axis (Z) substantially perpendicular to the nail-striking direction (X). The swing arm unit 22 includes a pivot portion 221 pivotably connected to the supporting frame 21, and a swing portion 222 opposite to the pivot portion 221.

In this embodiment, the striking unit 23 serves as a transmission member, and is mounted to and movable relative to the swing arm unit 22 along the swing arm unit 22. The striking unit 23 includes a striking member 231 movably connected to the swing arm unit 22, and a nail-striking member 232 connected to the striking member 231 and operable for striking a nail.

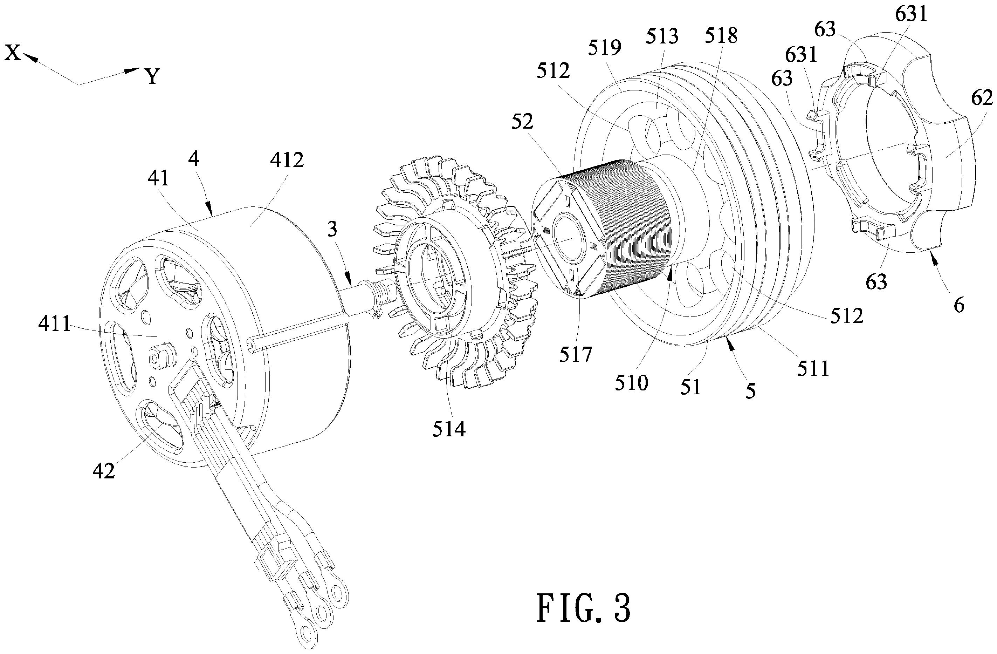

Further referring to FIG. 3, the noise reduction device is mounted to the supporting frame 21, is spaced apart from the striking unit 23, and includes a shaft member 3, a stator unit 4, a rotor unit 5, and a noise reducing unit 6.

The shaft member 3 is positioned relative to the supporting frame 21, and extends in a mounting direction (Y) substantially perpendicular to the nail-striking direction (X) and parallel to the swing axis (Z).

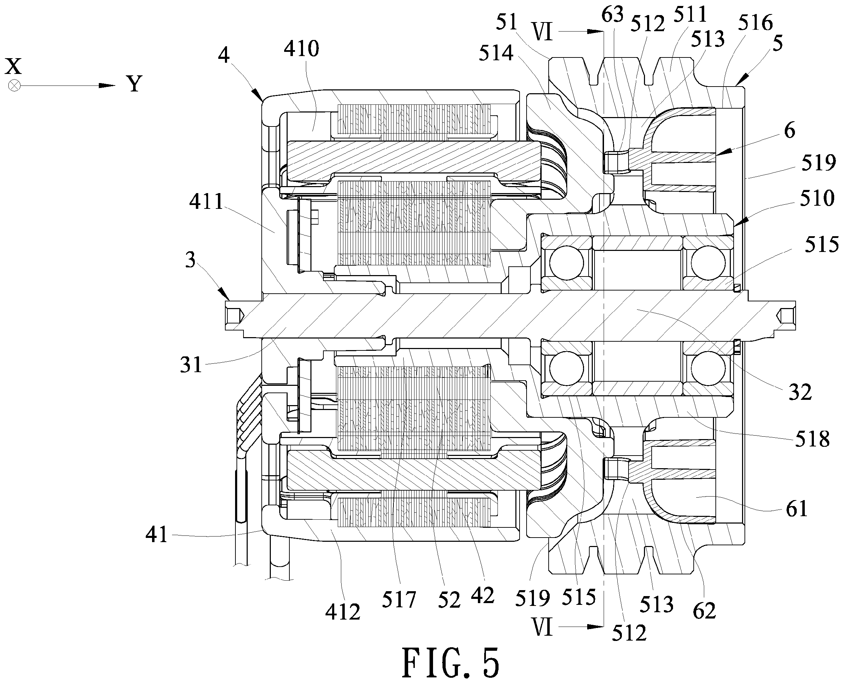

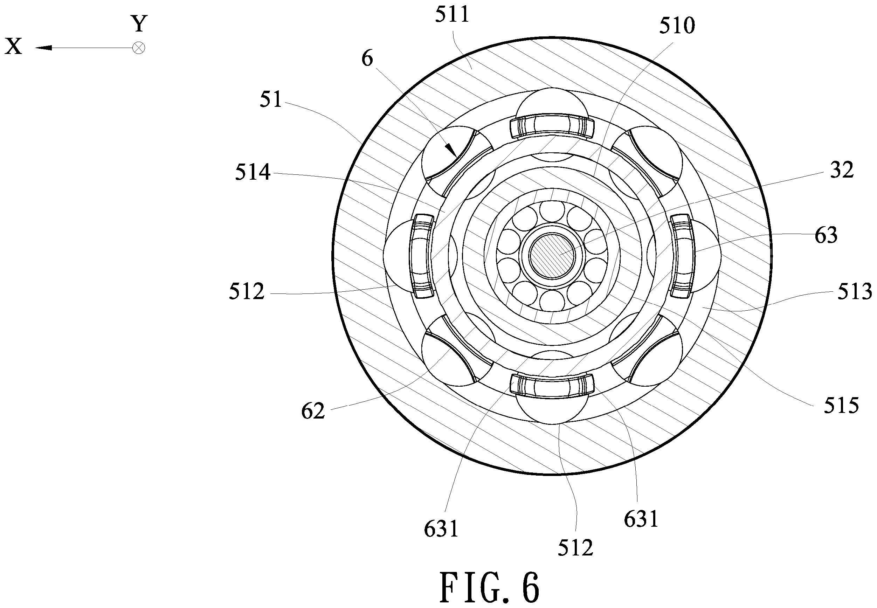

Referring to FIGS. 3 to 6, the shaft member 3 has a first shaft segment 31 and a second shaft segment 32 opposite to the first shaft segment 31 in the mounting direction (Y).

The stator unit 4 is connected to the shaft member 3, and includes an outer housing 41 and a coil assembly 42. The outer housing 41 has a sleeve portion 411 sleeved on the first shaft segment 31 of the shaft member 3, and a mounting portion 412 surrounding the shaft member 3, connected to the sleeve portion 411, and spaced apart from the shaft member 3. The mounting portion 412 and the shaft member 3 cooperate to define a mounting space 410.

The coil assembly 42 surrounds the shaft member 3, is for generating a magnetic field, is disposed in the mounting space 410, and is mounted to the mounting portion 412

The rotor unit 5 is rotatably sleeved on the shaft member 3, and includes a flywheel set 51 and a magnetic unit 52.

The flywheel set 51 is for contacting the striking unit 23 that is movable relative to the flywheel set 51, and is for driving movement of the striking unit 23 during rotation of the flywheel set 51. The flywheel set 51 includes a carrier 510, a wheel body 511, a rib plate 513, a side cover 514, and a plurality of bearings 515. The carrier 510 surrounds the shaft member 3, and is rotatably sleeved on the shaft member 3. The wheel body 511 surrounds the carrier 510, and is spaced apart from the carrier 510. The rib plate 513 interconnects the carrier 510 and the wheel body 511, and defines a plurality of rib holes 512. The side cover 514 is sleeved on the carrier 510. The bearings 515 are disposed between the carrier 510 and the shaft member 3. The carrier 510 extends in the mounting direction (Y), and includes a bushing portion 517, and a wheel frame portion 518 opposite to the bushing portion 517. The bushing portion 517 is adjacent to the shaft member 3, is disposed in the mounting space 410, and is disposed between the coil assembly 42 and the shaft member 3. The wheel frame portion 518 surrounds the second shaft segment 32 of the shaft member 3, is exposed outwardly of the outer housing 41, and is distal from the shaft member 3 than the bushing portion 517. The wheel body 511 and the wheel frame portion 518 define a noise reduction space 516. The noise reduction space 516 has two opposite openings 519 spaced apart from each other in the nail-striking direction (X). The rib holes 512 are arranged to surround the shaft member 3. The side cover 514 is disposed between the bushing portion 517 and the wheel frame portion 518 in the mounting direction (Y), and blocks one of the openings 519 of the noise reduction space 516. The bearings 515 are disposed between the wheel frame portion 518 and the second shaft segment 32 of the shaft member 3.

The magnetic unit 52 is disposed in the mounting space 410, is connected to the bushing portion 517, and is disposed between the coil assembly 42 and the shaft member 3. The magnetic unit 52 is driven by the magnetic field generated by the coil assembly 42 to rotate. The flywheel set 51 is co-rotatably connected to the magnetic unit 52, and rotates about the shaft member 3 when the magnetic unit 52 is driven to rotate.

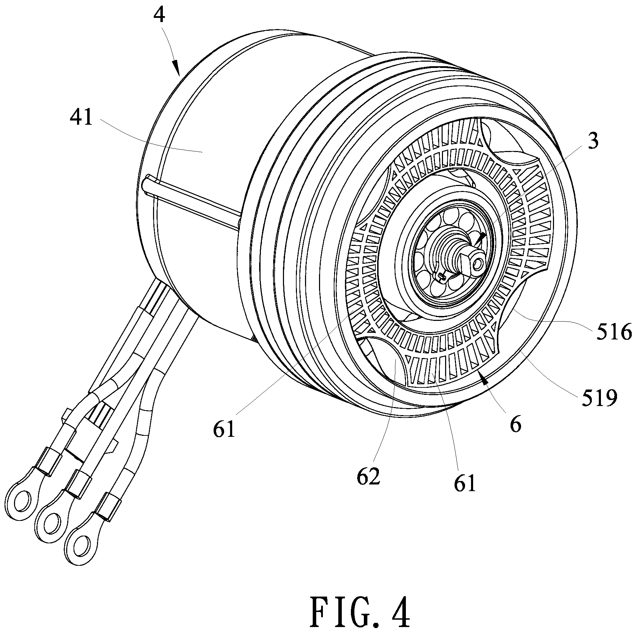

The noise reducing unit 6 surrounds the shaft member 3, is mounted in the noise reduction space 516 of the flywheel set 51, contacts the wheel body 511, and is spaced apart from the wheel frame portion 518 of the carrier 510. The noise reducing unit 6 is for absorbing energy of sound waves that is generated when the flywheel set 51 contacts the striking unit 23. In some embodiments, the noise reducing unit 6 is connected to the carrier 510 and the wheel body 511. In this embodiment, the noise reducing unit 6 has a porous structure, and includes a physical portion 62 defining a plurality of pores 61 (see FIG. 4), and a plurality of connecting members 63 (see FIG. 3) extending from one side surface of the physical portion 62 that faces the rib plate 513 through the rib plate 513. A ratio of a total volume of the pores 61 to a volume of the physical portion 62 (i.e., a void ratio) is greater than 60%. A size of each of the pores 61 is smaller than 3 mm in a circumferential direction surrounding the mounting direction (Y). The physical portion 62 is disposed in the noise reduction space 516, and blocks the other one of the openings 519 of the noise reduction space 516. Each of the connecting members 63 has two opposite barbs 631 extending through one of the rib holes 512 and resiliently engaging the rib plate 513, such that the noise reducing unit 6 is detachably connected to the rib plate 513.

It should be noted that the noise reducing unit 6 is not limited to have the porous structure and the pores 61 described herein, and may be made of a low density material such as plastic, rubber, foam or combinations thereof having a density lower than 0.003 g/mm³.

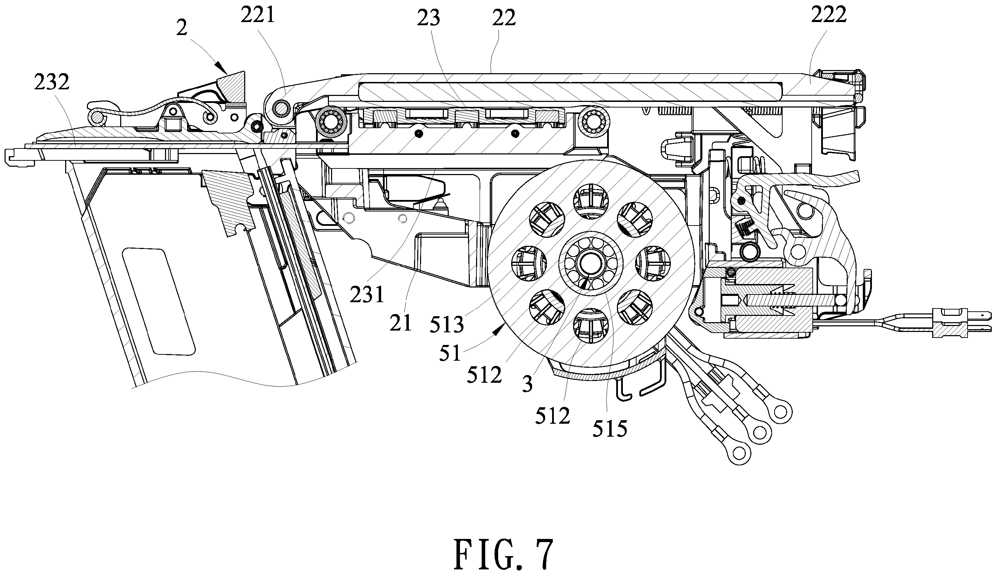

Referring to FIGS. 2, 5 and 7, the swing portion 222 of the swing arm unit 22 is operable to swing between a normal position (see FIG. 2) and a striking position (see FIG. 7). A shortest distance between the swing portion 222 and the flywheel set 51 when the swing portion 222 is at the normal position is larger than a shortest distance between the swing portion 222 and the flywheel set 51 when the swing portion 222 is at the striking position. The striking member 231 of the striking unit 23 is mounted to and movable relative to the swing arm unit 22 along the swing arm unit 22, and is driven by the swing arm unit 22 to contact the flywheel set 51 such that rotation of the flywheel set 51 drives the striking unit 23 to perform a nail striking operation. Specifically, the striking member 231 is movable substantially along the swing arm unit 22 between a standby position (see FIG. 2), where the striking member 231 is distal from the pivot portion 221 of the swing arm unit 22 and is proximate to the swing portion 222, and a nail-striking position (see FIG. 7), where the striking member 231 is moved in the nail-striking direction (X), is distal from the swing portion 222, and is proximate to the pivot portion 221.

When the swing arm unit 22 is at the normal position and the striking unit 23 is at the standby position, although the striking member 231 is proximate to the wheel body 511 of the flywheel set 51, since the shortest distance between the swing portion 222 and the wheel body 511 is large enough, the striking member 231 is spaced apart from the wheel body 511 of the flywheel set 51 and is not in contact with the wheel body 511.

When the magnetic unit 52 is driven by the magnetic field generated by the coil assembly 42 to rotate and drives rotation of the flywheel set 51, and the swing arm unit 22 swings from the normal position to the striking position so the shortest distance between the swing portion 222 and the wheel body 511 is decreased, the striking member 231 at the standby position is driven by the swing arm unit 22 to move toward the wheel body 511 of the flywheel set 51 until the striking member 231 contacts the wheel body 511. At this position, the wheel body 511 of the flywheel set 51 is in frictional contact with the striking member 231, and counteracts a frictional force generated between the wheel body 511 and the striking member 231. During rotation of the wheel body 511, the striking unit 23 is thrown by the rotation of the wheel body 511 to move from the standby position (see FIG. 2) toward the pivot portion 221 in the nail-striking direction (X) to the nail-striking position (see FIG. 7), such that the nail-striking member 232 strikes a nail to complete the nail striking operation.

When the swing arm unit 22 is moved from the normal position to the striking position, the striking member 231 comes into contact with the wheel body 511 of the flywheel set 51, energy of sound waves resulting from a contact between the striking member 231 and the wheel body 511 is propagated from the wheel body 511 to the noise reducing unit 6. Since speeds of the sound waves propagated in the physical portion 62 and the pores 61 are different, a speed difference exists therebetween, which causes an internal friction and converts energy of the sound waves into thermal energy that is to be dissipated by the noise reducing unit 6. In addition, by virtue of the noise reducing unit 6 being spaced apart from the wheel frame portion 518, less sound waves are propagated to the carrier 510 and thus the object of reducing noise may be achieved.

Through the above descriptions, the advantages of the embodiment of the present disclosure are summarized below.

First, since the flywheel set 51 is directly driven by the magnetic field generated by the coil assembly 42, a relatively low energy loss is achieved and a relatively low noise is generated during power transmission.

Second, by virtue of the noise reducing unit 6 that is mounted to the flywheel set 51 absorbing the energy of the sound waves from the striking unit 23 or the flywheel set 51, the noise generated when the flywheel set 51 contacts the striking unit 23 may be significantly reduced, which provides a relative pleasant user experience.

Third, the noise reducing unit 6 may be easily mounted to and detached from the flywheel set 51 through structures of the connecting members 63 without using a tool, thereby facilitating maintenance or repair of the noise reducing unit 6.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. An electric nail gun (2) comprising:
a supporting frame (21);
a swing arm unit (22) that is pivotably connected to said supporting frame (21) and swingable relative to said flywheel set (51); and
a striking unit (23) that is mounted to and movable relative to said swing arm unit (22) along said swing arm unit (22), and that is driven by said swing arm unit (22) to contact said flywheel set (51) such that rotation of said flywheel set (51) drives said striking unit (23) to perform a nail striking operation
said electric nail gun (2) **characterized in that**:
a noise reduction device is mounted to said supporting frame (21), is spaced apart from said striking unit (23), and includes:
a shaft member (3) that is positioned;
a stator unit (4) that is connected to said shaft member (3), and that includes a coil assembly (42) surrounding said shaft member (3) and for generating a magnetic field;
a rotor unit (5) that is rotatably sleeved on said shaft member (3), and that includes
a magnetic unit (52) disposed between said shaft member (3) and said coil assembly (42), and driven by the magnetic field generated by said coil assembly (42) to rotate, and
a flywheel set (51) co-rotatably connected to said magnetic unit (52), and contacting said striking unit (23) that is movable relative to said flywheel set (51), and for driving movement of said striking unit (23) during rotation of said flywheel set (51); and
said noise reduction device **characterized in that**:
a noise reducing unit (6) surrounds said shaft member (3), is mounted to said flywheel set (51), and is for absorbing energy of sound waves generated when said flywheel set (51) contacts said striking unit (23).

2. The electric nail gun (2) as claimed in claim 1, wherein:
said flywheel set (51) includes
a carrier (510) surrounding said shaft member (3) and rotatably sleeved on said shaft member (3),
a wheel body (511) surrounding said carrier (510) and spaced apart from said carrier (510), and
a plurality of bearings (515) disposed between said carrier (510) and said shaft member (3); and said noise reducing unit (6) is connected to said carrier (510) and said wheel body (511).

3. The electric nail gun (2) as claimed in claim 2, wherein:
said carrier (510) includes
a bushing portion (517) adjacent to said shaft member (3), disposed between said coil assembly (42) and said shaft member (3), and connected to said magnetic unit (52), and
a wheel frame portion (518) distal from said shaft member (3);
said wheel body (511) and said wheel frame portion (518) define a noise reduction space (516);
said bearings (515) are disposed between said wheel frame portion (518) and said shaft member (3); and
said noise reducing unit (6) is mounted in said noise reduction space (516), contacts said wheel body (511), and is spaced apart from said wheel frame portion (518).

4. The electric nail gun (2) as claimed in any one of claims 1 to 3, wherein said noise reducing unit (6) has a porous structure and includes a physical portion (62) defining a plurality of pores (61), a void ratio of a total volume of said pores (61) to a volume of said physical portion (62) is greater than 60%.

5. The electric nail gun (2) as claimed in claim 4, wherein a size of each of said pores (61) along a circumferential direction surrounding a mounting direction (Y) is smaller than 3 millimeters.

6. The electric nail gun (2) as claimed in any one of claims 1 to 5, wherein said noise reducing unit (6) is made of a low density material, said low density material being plastic, rubber, foam or combinations thereof having a density lower than 0.003 g/mm³.

7. The electric nail gun (2) as claimed in any one of claims 1 to 6, wherein:
said flywheel set (51) further includes
a rib plate (513) interconnecting said carrier (510) and said wheel body (511) and defining a plurality of rib holes (512), and
a side cover (514) sleeved on said carrier (510);
said noise reducing unit (6) further includes a plurality of connecting members (63) extending from said physical portion (62) through said rib plate (513);
each of said connecting members (63) has two opposite barbs (631) extending through one of said rib holes (512) and engaging said rib plate (513), such that said noise reducing unit (6) is detachably connected to said rib plate (513).

8. The electric nail gun (2) as claimed in any one of claims 1 to 7, wherein
said stator unit (4) further includes an outer housing (41) having
a sleeve portion (411) that is sleeved on said shaft member (3), and
a mounting portion (412) that surrounds said shaft member (3), that is connected to said sleeve portion (411), and that is spaced apart from said shaft member (3); and
said coil assembly (42) is mounted to said mounting portion (412).

9. The electric nail gun (2) as claimed in any one of claims 1 to 8, wherein:
said swing arm unit (22) is operable to swing relative to said flywheel set (51) about a swing axis between a normal position and a striking position; and
a shortest distance between swing arm unit (22) and said flywheel set (51) when said swing arm unit (22) is at the normal position is larger than a shortest distance between said swing arm unit (22) and said flywheel set (51) when said swing arm unit (22) is at the striking position.

10. The electric nail gun (2) as claimed in claim 9, wherein said striking unit (23) is thrown by said flywheel set (51) to move in a nail-striking direction (X) substantially perpendicular to the swing axis when being driven by the swing arm (22).
